# EUROPEAN PATENT APPLICATION

(11) **EP 2 283 998 A1**
(43) Date of publication of application: **16.02.2011**
(21) Application number: 09758350.4
(22) Date of filing: 03.06.2009
(51) Int. Cl.: B29D 30/30, B60C 15/06, D07B 1/06

(54) **TIRE MANUFACTURING METHOD AND APPARATUS**

(30) Priority: 04.06.2008 JP 2008146530
(71) Applicant: Bridgestone Corporation, Tokyo 104-8340 (JP)
(72) Inventor: OGAWA, Yuichiro, Kodaira-shi Tokyo 187-8531 (JP)
(74) Representative: Oxley, Robin John George
(86) International application number: PCT/JP2009/060160
(87) International publication number: WO 2009/148083

(57) **Abstract**

A cord reinforcing layer 30 can be highly efficiently formed with easy control, and the amplitude and the wavelength of a wavy steel cord 32 can be made uniform throughout the cord reinforcing layer.

When the wavy steel cord 32 (ribbon-like body 37) is wound plural times around the forming drum 35 to form the cylindrical cord reinforcing layer 30, the amount of extension is made decreased with distance from a set position P of a bead core 12 in the axial direction, and the amount of extension applied in advance to the wavy steel cord 32 in the vicinity of the set position P is approximated to the amount of extension according to the expansion and deformation of the wavy steel cord 32 at a position spaced away from the set position P, whereby at least either one of the amplitude and the wavelength of the wavy steel cord in the tire can be made uniform throughout the cord reinforcing layer 30.

## Description

### TECHNICAL FIELD

The present invention relates to a method and a device of manufacturing tire in which a cord reinforcing layer made of a wavy steel cord is provided between the bead portion and the shoulder portion.

### BACKGROUND ART

As conventional tire, there has been known that, for example as described in JP 2006-160053 A1, a cord reinforce layer (wire chafer) overlaps with a folded portion of the carcass layer is partially provided between the bead portion and the shoulder portion to prevent a separation at the end of the folded portion of the carcass layer and thus improve a durability of the bead portion.

Such cord reinforcing layer is formed such that a single steel cord covered with rubber is bent in a wave form with a substantially constant amplitude and wavelength, and then spirally wound directly on the axially outside of the folding portion of the carcass layer in a toroidal form. However, in a case where the cord reinforcing layer is formed as described above, the steel cord should be guided along a complex curve, thus a control of the winding become cumbersome and also a work efficiency decreases.

To overcome such problem, it has been considered that a cylindrical semi-finished tire is formed such that, for example as described in JP 11-309789 A1, a wavy steel cord having a substantially constant amplitude and wavelength is spirally wound plural times on a cylindrical forming drum to form a cylindrical cord reinforcing layer, a carcass layer is formed by winding a carcass ply and others on the cylindrical forming drum, and a pair of bead cores are positioned respectively on a set position located axially outside of each end of the carcass layer.

### DISCLOSURE OF THE INVEVENTION

### TASK TO BE SOLVED BY THE INVENTION

The semi-finished tire formed as described above is toroidally expanded and deformed, a belt layer and a tread are attached on the outside of the semi-finished tire to form an unvulcanized tire and the unvulcanized tire is vulcanized to make finished tire. However, in the process of toroidally deforming the sem-finished tire, since the cord reinforcing layer is larger extended in a circumferential direction as a distance from the bear core increases (i.e., the outer in the radial direction, the cord reinforcing layer is more extended), the amplitude of the wavy steel cord of the cord reinforcing layer becomes smaller while the wavelength thereof becomes larger as the distance from the bead core increases. Consequently, throughout the cord reinforcing layer as a whole, particularly seen in the radial direction, the amplitude and the wavelength of the wavy steel cord become extremely nonuniform, leading a problem that said durability of the bead portion cannot be sufficiently improved.

An object of the present invention is to provide a method and a device of manufacturing tire that a cord reinforcing layer can be formed with easy control and highly efficiently, and the amplitude and the wavelength of the wavy steel cord can be uniformized over all the cord reinforcing layer.

### SOLUTION FOR THE TASK

First, such object can be achieved by a method of manufacturing tire, the tire having: a carcass layer provided with bead cores at respective ends thereof and toroidally extending; a cord reinforcing layer disposed at least partially between a bead portion and a shoulder portion, extending in a circumferential direction and having a wavy steel cord bent in a wave form; and a tread disposed at least over the radially outside of the carcass layer in a radial direction, the method comprising steps of: winding a carcass ply on a cylindrical forming drum and forming a cylindrical carcass layer; setting bead cores at set positions respectively on the outer sides of both axial ends of the carcass layer; forming a cylindrical cord reinforcing layer by winding a wavy steel cord a plurality of times around the forming drum such that an amount of an extension of the wavy steel cord is more reduced as the winding position is further away from each the set position for the respective bead cores in the axial direction, ; forming an unvulcanized tire by expanding and deforming a cylindrical semi-finished tire, which is made of the carcass layer, the bead cores and the cord reinforcing layer, into a substantially toroidal form, and then attaching at least tread on the outer side of the semi-finished tire; and, vulcanizing the unvulcanized tire.

Second, such object can be achieved by a device of manufacturing tire, the tire having: a carcass layer provided with bead cores at respective ends thereof and toroidally extending; a cord reinforcing layer disposed at least partially between a bead portion and a shoulder portion, extending in a circumferential direction and having a wavy steel cord bent in a wave form; and a tread disposed at least over the radially outside of the carcass layer, the device comprising: a carcass supplying means for supplying and winding a carcass ply on the outer side of a cylindrical forming drum to form a cylindrical carcass layer; a bead core supplying means for supplying and setting bead cores to set positions on the outer sides of both axial ends of the carcass layer; a cord supplying means for forming a cylindrical core reinforcing layer by winding a wavy steel cord a plurality of times around the forming drum so that an amount of extension of the wavy steel cord is more reduced as an axial distance from each the set position for the respective bead cores more increases; a forming means for forming an unvulcanized tire by expanding and deforming a cylindrical semi-finished tire, which is made of the carcass layer, the bead cores and the cord reinforcing layer, into a substantially toroidal form, and then attaching at least tread on the radial outside of the semi-finished tire; and, a vulcanizing means for vulcanizing the unvulcanized tire to obtain the finished tire.

### EFFECT OF THE INVENTION

When the cylindrical semi-finished tire having the cord reinforcing layer as described above is expanded and deformed into the toroidal form, the cord reinforcing layer is extended larger in the circumference direction as a distance from the bead core more increases, thus, the amplitude of the wavy steel cord of the cord reinforcing layer becomes smaller while the wavelength thereof becomes larger. However, according to the invention of claim 1, since the cylindrical cord reinforcing layer is formed such that the wavy steel cord is wound plural times around the forming drum while the amount of extension decreases with distance from the set position for the bead core in the axial direction, the amount of extension of the portion of the wavy steel close to the set position, which is applied in advance, is made approximated to the amount of extension according to the expansion and deformation of the wavy steel cord at the position spaced away from the set position. Accordingly, at least one of the amplitude and the wavelength of the wavy steel cord of the tire become uniformized throughout the cord reinforcing layer as a whole, in particular, as seen in the radial direction, thus the performance of the tire improves.

Further, the wavy steel cord is formed such that the straight steel cord is bent into the wave form at the same time with winding around the cylindrical forming drum or in advance. Therefore, it is only necessary to laterally guide the (wavy) steel cord along a line parallel to the rotation axis of the forming drum, and as a result, winding control becomes easier, and the working efficiency also can be improved. The tire as described above can be formed by the device described in claim 7 with ease and high efficient.

With the configuration as described in claim 2, the forming operation of the pre-extended wavy steel cord becomes easier, while the amplitude of the wavy steel cord in the finished tire can be effectively uniformized within the cord reinforcing layer. With the configuration as described in claim 3, both the amplitude and the wavelength of the wavy steel cord can be further uniformized throughout the cord reinforcing layer as a whole. With the configuration as described in claim 4, the forming operation of the pre-extended wavy steel cord becomes easier, while the wavelength of the wavy steel cord in the finished tire can be effectively uniformized within the cord reinforcing layer.

With the configuration as described in claim 5, the desired amount of the extension of the wavy steel cord can be easily ensured without provision of any special extending means. With the configuration as described in claim 6, the cord reinforcing layer can be formed highly efficiently and easily. With the configuration as described in claim 8, the wavy steel cord can be formed highly efficiently and easily.

### BRIEF DESCRIPTION OF THE DRAWINGS

FIG. 1 is a sectional view of a tire taken in the tire meridian direction showing a first embodiment of the present invention;
FIG. 2 is a partially cut diagram as viewed from the direction of the arrow I-I in FIG. 1;
FIG. 3 is a schematic sectional side view explaining a winding operation at a forming drum;
FIG. 4 is a schematic front view in the vicinity of a ribbon forming device and the forming drum;
FIG. 5 is a schematic plan view in the vicinity of a ribbon forming device and the forming drum;
FIG. 6 is an enlarged partially-sectional side view explaining a state of a wavy steel cord is wound;
FIG. 7 is a schematic sectional side view explaining a winding operation on a forming drum;
FIG. 8 is a schematic sectional side view explaining a forming operation on a shaping drum;
FIG. 9 is a sectional front view explaining a vulcanizing operation bya vulcanizing means;
FIG. 10 is a enlarged partially-sectional side view similar to FIG. 6, showing a second embodiment of the present invention; and,
FIG. 11 is a sectional view taken in the meridian direction similar to FIG. 1, showing the other embodiment of the present invention.

### MODE FOR CARRYING OUT THE INVENTION

Hereinbelow, a first embodiment according to the present invention will be explained on the basis of the drawings.

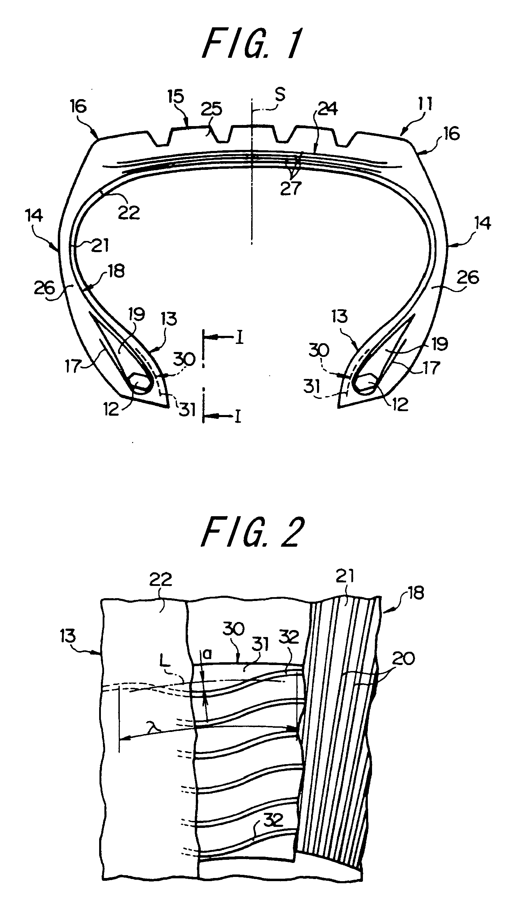

In FIG. 1 and FIG. 2, a reference number 11 represents a vulcanized pneumatic radial tire which can be used for truck, bus and so on for example. This pneumatic radial tire 11 is provided with a pair of bead portions 13 each having a bead core 12 embedded therein, a pair of side wall portions 14 respectively extend from the bead portions 13 and radially outward. A reference number 15 represents a tread portion formed in a substantially cylindrical shape. A pair of shoulder portions 16 are positioned between the each axial end of the tread portion 15 and the radially outer end of each the side wall portion 14 .

Further the pneumatic tire 11 has a carcass layer 18 toroidally extending between the bead cores 12 to reinforce the side wall portions 14 and the tread portion 15. Both ends of the carcass layer 18 are folded around the bead cores 12 and fillers 19 whose radial inner ends are fixed by the bead cores 12, whereby the bead cores 12 are set at both ends of the carcass layer 18. The carcass layer 18 is made of at least one carcass ply 21 (one carcass ply in the present embodiment) in which a number of extensionless cords--steel cord 20 herein--extending in the radial direction (meridian direction) is embedded.

An inner liner 22 formed by rubber is disposed on the inner side of the carcass layer 18 located between the bead cores 12. Note that the carcass layer 18 may be configured by a so-called half ply structure, in which the carcass layer is divided at a center portion thereof. The both ends of the carcass layer 18 may be terminated at a slightly radially inward of the bead core, instead of being folded around the bead cores 12. In this case, the bead core 12 may be divided in the axial direction of the carcass layer into axially inner side portion and axially outer side portion, thus the carcass layer may be held between the divided portions of the bead core.

There are disposed a belt layer 24 and a top tread 25 as a tread on the outer side in the radial direction of the carcass layer 18, and side treads 26 on the respective outer sides in the axial direction of the carcass layer 18. The belt layer 24 comprises at least two (three in the present embodiment) belt plies 27. Within the belt plies 27, there are embedded extensionless cords inclined at a predetermined angle with respect to the tire equator S and arranged in mutually opposite directions with respect to the tire equator S.

A reference number 30 represents cord reinforcing layers disposed at the respective bead portions 13 located on the inner side of the bead cores 12 and the carcass layer 18 in the axial direction, and each of the cord reinforcing layers 30 comprises at least one reinforcing ply 31 (in the present embodiment, one reinforcing ply). Further, within the cord reinforcing layer 30 (reinforcing ply 31), a wavy steel cord 32 bent in a wave form (zigzag shape) and continuously extending in a circumferential direction with a spiral form is embedded, the amplitude a and the wavelength λ of which are almost constant in each spiral. Yet further, distance between base lines L of the adjacent wavy steel cords 32 in the meridian direction of the tire is substantially constant, and as a result, the bead portion 13 is further reinforced by the cord reinforcing layer 30.

In the embodiment described above, the pneumatic radial tire 11 is adapted to truck or bus, however, the present invention can be applied to tires for use in passenger cars, aircrafts, or construction vehicles of large size. Further, in the embodiment described above, the pneumatic tire 11 is radial tire, however, the present invention may be applied to bias tire for air craft which lacks the belt layer, or a general bias tire having a breaker layer disposed in lieu of the belt layer. As described above, at least a tread is disposed on the outer side of the carcass layer 18 in the radial direction.

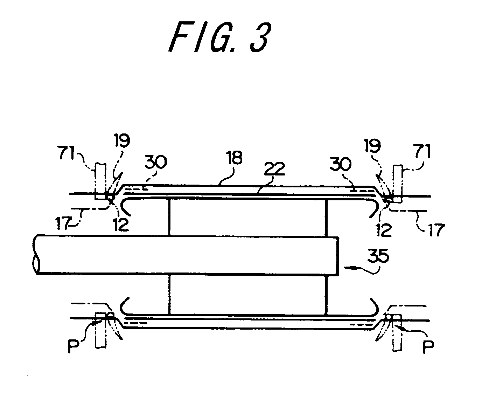

Next, the pneumatic tire 11 as described above can be manufactured, for example, by processes as described below. In FIGs. 3, 4 and 5, a reference number 35 represents a forming drum in a cylindrical shaped which is expandable and reducible in diameter and rotatable around a horizontal axis. While the forming drum 35 is rotating around the axis by receiving a rotary-driving force from a servomotor (not-shown), a sheet-like inner liner 22 is supplied to the forming drum 35 from a inner liner supplying means 36 disposed in front of the forming drum 35, and the supplied inner liner 22 is wound around the forming drum 35, whereby a cylindrical inner liner 22 is formed.

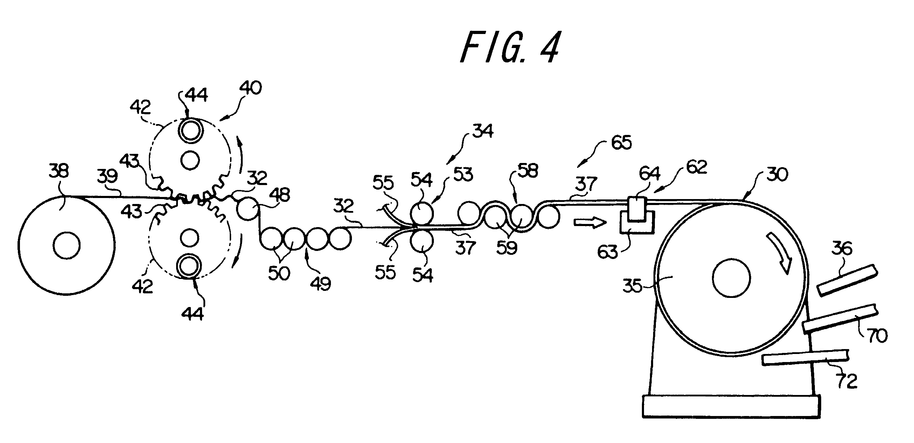

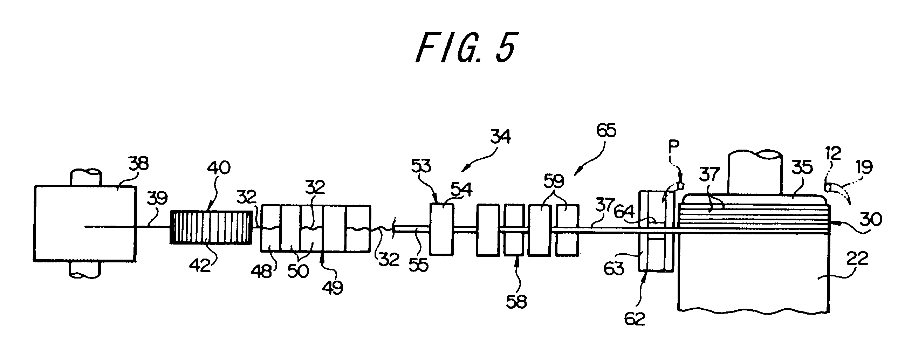

Then, a ribbon-like body 37 having the wavy steel cord 32 embedded therein is supplied to the outer side of both ends in the axial direction of the forming drum 35 (inner liner 22), and is wound plural times around the forming drum 35 (inner liner 22), whereby the cylindrically-shaped cord reinforcing layer 30 is formed with the ribbon-like body 37. The ribbon-like body 37 to be supplied to the forming drum 35 may be formed, for example, by a ribbon forming device 34 as shown in FIGs. 4 and 5.

In FIGs. 4 and 5, a reference number 38 represents a bobbin to which a steel cord 39 formed by a monofilament or stranded wire is wound a large number of times. The steel cord 39 fed from this bobbin 38 extends linearly, travels forward, and is supplied to bending means 40 located in front of (on the downstream side) the bobbin 38. Since a certain braking force is applied to the bobbin 38, a predetermined internal tension is applied to the steel cord 39 stretched between the bobbin 38 and the bending means 40.

The bending means 40 has a pair of gears 42 composed by spur gears whose rotation axes are parallel to each other and spaced away from each other in a vertical direction. The gears 42 are arranged such that outer teeth 43 thereof bite with each other at a predetermined amount, while being spaced away from each other at a predetermined distance. A reference number 44 represents a driving mechanism that adds a driving force to the gears 42, and drives and rotates the gears 42 in opposite direction at a uniform velocity (constant angular velocity). When the straight steel cord 39 described above is supplied between the gears 42 while the gears are rotating by the driving mechanisms 44, the straight steel cord 39 is pressed from the upper and the lower sides by the outer teeth 43 at the time of passing through the gears 42 to be plastic-deformed, while being continuously bended into a wave form, whereby the straight steel cord 39 becomes the wavy steel cord 32 bent in a wave form in a vertical plane.

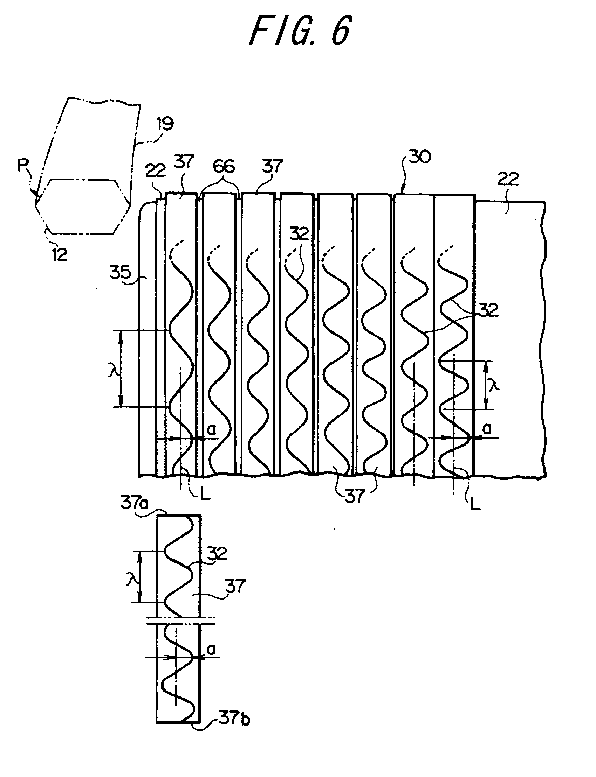

The amplitude a (distance from the base line L to an apex of wave) of the wavy steel cord 32 is almost the same as 1/2 of the biting amount of the respective outer teeth 43, and is constant in any position in the longitudinal direction. The wavelength λ of the wavy steel cord 32 is almost the same as the distance between adjacent two outer teeth 43 in the circumference direction on a circle passing through a middle point between the rotation axes of the gears 42, and is constant in any position in the longitudinal direction (see FIG. 6 for amplitude a, wavelength λ).

The pair of gears 42 provided the predetermined intervals between the outer teeth 43 biting each other, and the driving mechanism 44 that rotates the gears 42 in the opposite direction at the uniform velocity are constitute the bending means 40as a whole, located on the upper stream side of an after mentioned cord supplying means 65, which forms the wavy steel cord from a straight steel cord by passing the straight steel cord 39 between the rotating gears 42 and bending the straight steel cord 39 into a wave form before the wavy steel cord is wound. By configuring the bending means 40 with the gears 42 and the driving mechanism 44, the wavy steel cord 32 can be highly efficiently and easily formed.

It should be noted that, although the wavy steel cord 32 is formed by the pair of gears 42 in the embodiment described above, the wavy steel cord may be formed, in the present invention, such that: a pair of horizontal circular plates having outer edges vertically overlapped with each other are provided; a large number of pins protruding upwardly from the outer edge on an upper surface of a lower circular plate are fixed so as to be spaced at regular intervals; a large number of pins protruding downwardly from the outer edge on a lower surface of an upper circular plate are fixed so as to be spaced at regular intervals; and, the straight steel cord is bitten between the pins intruding with each other while these circular plates are being rotated in the opposite directions around respective rotation axes, thereby continuously bending the steel cord in the wave form.

A reference number 48 represents a freely-rotatable lying roller disposed ahead of the bending means 40, and the rotation axis of the lying roller 48 is in parallel to the rotation axes of the gears 42. The wavy steel cord 32 formed by the bending means 40 is brought into contact with the outer periphery of the lying roller 48 by only about 1/4 turn, and then, changes its direction to the downward to travel. At this time, the wavy steel cord 32 bent in the wave form in a vertical plane is twisted by 90 degrees between the bending means 40 and the lying roller 48, and is bent in a wave form in a horizontal plane.

A reference number 49 represents a group of roller formed by plural rollers 50 disposed ahead of the lying roller 48 and below the lying roller 48, and at least one roller 50 of the rollers 50 constituting the group of roller 49 is driven and rotated by a driving motor (not-shown). The wavy steel cord 32 twisted by 90 degrees by the lying roller 48 travels forward while being sequentially brought into contact with the outer peripheries of the rollers 50 constituting the group of roller 49. Since the peripheral velocities of the rollers 50 are the same as the traveling velocity of the wavy steel cord 32 discharged from the bending means 40, the wavy steel cord 32 is supplied while the amplitude a and the wavelength λ thereof remain unchanged.

A reference number 53 represents coating means formed by a pair of coating rollers 54 disposed ahead of the group of roller 49, and the coating rollers 54 can freely rotate and are arranged so as to be vertically spaced away from each other. When the wavy steel cord 32 and thin rubber ribbons 55 that sandwich the wavy steel cord 32 from the upper and lower sides are supplied between the coating rollers 54, the thin rubber ribbons 55 are pressed by the coating rollers 54, and is closely contacted with the wavy steel cord 32 while sandwiching the wavy steel cord 32, thereby coating the wavy steel cord 32 from both sides. As described above, the ribbon-like body 37 formed by the wavy steel cord 32 and the thin rubber ribbons 55 is formed. Here, the thin rubber ribbon 55 is formed by a constant-width band-like unvulcanized rubber having a width slightly wider than twice the amplitude a of the wavy steel cord 32, and in general, is formed by a calender roll and extruder.

A reference number 58 represents a feeding mechanism disposed ahead of the coating means 53. This feeding mechanism 58 is formed by plural rollers 59 parallel to the rollers 50, and at least one roller 59 is rotated by a driving motor (not-shown) at a constant rotation velocity, that is, is driven and rotated such that peripheral velocities thereof are equal to a traveling velocity of the ribbon-like body 37 discharged from the coating rollers 54. The ribbon-like body 37 travels while being sequentially brought into contact with outer peripheries of the rollers 59 of the feeding mechanism 58, whereby the ribbon-like body 37 (wavy steel cord 32) is fed from the feeding mechanism 58 to the forming drum 35 at a constant traveling velocity at all times.

In FIGs. 4, 5, and 6, a reference number 62 represents a traverse-motion mechanism disposed between the feeding mechanism 58 and the feeding drum 35. The traverse-motion mechanism 62 comprises: a guiding body 63 extending parallel to the rotation axis of the forming drum 35; a movable guide 64 movably supported by the guiding body 63 and defining a position (position in the axial direction of the forming drum 35) of the ribbon-like body 37 traveling toward the forming drum 35; and, a driving mechanism having a screw mechanism (not-shown), driving motor and the like that traversely moves the ribbon-like body 37 in the rotation axis direction of the forming drum 35 by moving the movable guide 64 along the guiding body 63.

Then, when the movable guide 64 of the traverse-motion mechanism 62 travels along the guide body 63 at a constant velocity at the time when the ribbon-like body 37 is being supplied from the feeding mechanism 58 to the forming drum 35, the ribbon-like body 37 is spirally wound plural times around the periphery of the forming drum 35 from the outer side in the axis direction toward the inner side in the axial direction, whereby the cylindrical cord reinforcing layer 30 is formed on the outer side of the forming drum 35. After the cord reinforcing layer 30 is formed as described above, the ribbon-like body 37 is cut in a width direction. By forming the cord reinforcing layer 30 such that the ribbon-like body 37 (wavy steel cord 32) is spirally wound plural times as described above, the cord reinforcing layer 30 can be highly efficiently formed with ease. Note that the ribbon-like body 37 may be wound around the periphery of the forming drum 35 from the inner side in the axial direction toward the outer side in the axial direction.

Here, at the time when the ribbon-like body 37 is supplied from the feeding mechanism 58 to the forming drum 35 while being traversely moved by the traverse-motion mechanism 62, and is wound around the periphery of the forming drum 35, the peripheral velocity of the forming drum 35 is controlled by using a servomotor so as to be faster than a feeding velocity of the ribbon-like body 37 from the feeding mechanism 58, and such that a velocity difference therebetween becomes gradually smaller as the ribbon-like body 37 moves from a winding start to a winding end.

With the control described above, at the time of winding, the entire ribbon-like body 37 stretched between the feeding mechanism 58 and the forming drum 35 is almost uniformly extended in the longitudinal direction immediately before the winding; as the winding of the ribbon-like body 37 advances from the outer side of the forming drum 35 in the axial direction to the inner side in the axial direction (as the ribbon-like body 37 advances from a start edge 37a to an end edge 37b (see FIG. 6)), the amount of extension in the longitudinal direction at this time gradually decreases, that is, becomes maximum at a position closest to a set position P of the bead core 12, which will be described later; and, the amount of extension in the longitudinal direction decreases with distance from the set position P in the axial direction. Consequently, the amplitude a of the wavy steel cord 32 wound around the forming drum 35 is adjusted so as to gradually increase with distance from the set position P of the bead core 12 in the axial direction. The wavelength λ of the wavy steel cord 32 becomes shorter with distance from the set position P.

The aforementioned feeding mechanism 58, traverse-motion mechanism 62, and servomotor that drives the forming drum 35 as a whole constitute cord supplying means 65 that forms the cylindrical cord reinforcing layer 30 such that the wavy steel cord 32 (ribbon-like body 37) is wound plural times around the the forming drum 35 from the set position P of the bead core 12 while the amount of extension decreases with distance from the set position P of the bead core 12 in the axial direction. The amount of extension described above may be continuously decreased or may be decreased in a stepped manner for each one turn or each plural turns.

Here, the amplitude a of the wavy steel cord 32 before extended can be set at a constant value, by using, as the wavy steel cord, the wavy steel cord 32 (ribbon-like body 37 having constant width) having the amplitude a before extended constant as described above, and by approximating the amplitude a of the wavy steel cord 32 wound at the set position P, more specifically, at a position closest to the inner end of the set position P in the radial direction, to the amplitude a of the wavy steel cord 32 located on the outermost side of the cord reinforcing layer 30 in the pneumatic tire 11 in the radial direction. The forming operation of the wavy steel cord 32 becomes easy, and, at the same time, the amplitude a of the wavy steel cord 32 of the pneumatic tire 11 can be made effectively uniform within the cord reinforcing layer 30.

Further, at the time of using the wavy steel cord 32 having the constant amplitude a before extended, and making the distance between the base lines L of the adjacent wavy steel cords 32 substantially equal as described in connection with the pneumatic tire 11, the ribbon-like body 37 is largely extended at a position close to the set position P, and a gap 66 between side edges of the ribbon-like body 37 appears as shown in FIG. 6. However, the gap 66 as described above gradually narrows with distance from the set position P.

With the configuration as described above, after the pneumatic tire 11 is manufactured, the distance between the base lines L of the adjacent wavy steel cords 32 is made substantially equal, and distribution of the wavy steel cord 32 in the cord reinforcing layer 30 becomes uniform, whereby the reinforcement effect by the cord reinforcing layer 30 improves. Note that the ribbon-like body 37 may be wound around the forming drum 35 while the respective side ends of the ribbon-like body 37 having the amplitude a of the wavy steel cord 32 become gradually larger by extension are being brought into contact with each other. In this case, the distance between the base lines L of the adjacent the wavy steel cord 32 slightly varies according to locations.

Further, in order to avoid the generation of the gap 66 as described above, it may be possible to wind the formed ribbon-like body 37 around the forming drum 35 while the respective side ends of the formed ribbon-like body 37 are being brought into contact with each other, by widening the width of the thin rubber ribbon 55 that coats the wavy steel cord 32 at the winding start, and narrowing the width of the thin rubber ribbon 55 that coats the wavy steel cord 32 toward the winding end side. Alternatively, it may be possible to employ a ribbon-like body 37 having constant width, and wind the ribbon-like body 37 having constant width around the forming drum 35 while the overlapped amount of the respective side ends of the ribbon-like body 37 increases with distance from the set position P in the ribbon-like body 37.

Yet further, in a case where the wavy steel cord 32 whose amplitude a and wavelength λ before extended are constant at any position in the longitudinal direction as described above is employed as the wavy steel cord, it is preferable that both the amplitude a and the wavelength λ of the wavy steel cord 32 wound at the position closest to the set position P be made almost equal to or substantially equal to the amplitude a and the wavelength λ of the wavy steel cord 32 located at the outermost side of the cord reinforcing layer 30 in the radial direction in a state of the complete pneumatic tire 11, so that both the amplitude a and the wavelength λ of the wavy steel cord 32 can be strengthened and made uniform throughout the cord reinforcing layer 30.

Still further, in a case where the entire wavy steel cord 32 (ribbon-like body 37) stretched between the feeding mechanism 58 and the forming drum 35 is uniformly extended by proving the feeding mechanism 58 that feeds the ribbon-like body 37 (wavy steel cord 32) toward the forming drum 35 at a constant velocity, and varying the peripheral velocity of the forming drum 35, the wavy steel cord 32 (ribbon-like body 37) can be extended by a desired amount in a simple and reliable manner without any special extending means.

Here, the wavy steel cord 32 between the feeding mechanism 58 and the forming drum 35 may be extended such that, in addition to keeping the peripheral velocity of the forming drum 35 at a constant velocity, the rollers 59 constituting the feeding mechanism 58 is provided with an electro-magnetic brake capable of varying a braking force to any value by voltage control, and the braking force from the electro-magnetic brake is applied to the rollers of the feeding mechanism 58 while being varied, as is the case with the extension described above. In this case, a festoon of the ribbon-like body 37 is formed between the feeding mechanism 58 and the coating means 53 to make the festoon absorb the difference in the traveling velocity therebetween of the ribbon-like body 37. Further, it may be possible to employ a configuration in which, during the travel, the wavy steel cord 32 is extended in advance, for example, between the bending means 40 and the feeding mechanism 58, and the extended wavy steel cord 32 is wound directly around the forming drum 35.

It should be noted that, although, in the embodiment described above, one wavy steel cord 32 is coated with the thin rubber ribbon 55 to be formed into the ribbon-like body 37, and the formed ribbon-like body 37 is wound around the forming drum 35, it may be possible in the present invention to employ a configuration in which a small number of wavy steel cord 32, for example, two to five wavy steel cords 32 are integrated; these wavy steel cords 32 are coated with the thin rubber ribbon 55 to form the ribbon-like body 37; and, this ribbon-like body 37 is wound around the forming drum 35. Alternatively, it may be possible to supply and wind around the forming drum 35 one or a small number of naked wavy steel cord 32, that is, without rubber coating, or one wavy steel cord 32 having been coated with thick rubber therearound.

Although, in the embodiment described above, the straight steel cord 39 is bent in a wave form by the bending means 40 to form the wavy steel cord 32, and then, the wavy steel cord 32 (ribbon-like body 37) is wound around the forming drum 35 while being extended, it may be possible in the present invention to employ a configuration in which the straight steel cord 39 is supplied to the forming drum 35, the straight steel cord 39 is extended on the forming drum 35 while being bent in the wave form, and at the same time, the wavy steel cord 32 is wound around the forming drum 35.

Although the ribbon-like body 37 (wavy steel cord 32) is spirally wound plural times around the forming drum 35 in the embodiment described above, it may be possible in the present invention to wind the ribbon-like body 37 (wavy steel cord 32) on the forming drum 35 plural times such that: the ribbon-like body 37(wavy steel cord 32) is wound around the forming drum 35 by an angle slightly less than one turn in a substantially circumferential direction, and then is diagonally wound around the forming drum 35 by the remaining angle; the winding position is shifted to the inner side in the axial direction by about width of the ribbon-like body 37; and these steps are repeated plural times. Guiding control can be easily performed because winding of the ribbon-like body 37 around the forming drum 35 is sufficiently performed only by traversely guiding the ribbon-like body 37 (wavy steel cord 32) along a line parallel to the rotation axis of the forming drum 35.

Again, in FIGs. 3, 4, and 5, a reference number 70 represents a carcass supplying means disposed ahead of the forming drum 35, and forms a cylindrical carcass layer 18 such that, after the inner liner 22 and the cord reinforcing layer 30 (wavy steel cord 32) are wound to the forming drum 35, the sheet-like carcass ply 21 is supplied to the outer side of the forming drum 35 (inner liner 22 and cord reinforcing layer 30), and is wound around them.

Next, a diameter of the carcass layer 18 located on the outer side in the axial direction than the set position P is reduced by diameter-reducing means (not-shown) as shown in the virtual line, and bead core supplying means 71 transports the bead core 12 having the filler 19 to the set position P located on the outer side of both ends of the carcass layer 18 in the axial direction, in this embodiment, to a step formed on the carcass layer 18 by the diameter reduction.

It should be note that the winding of the cord reinforcing layer 30 described above may be performed before the carcass ply 21 is wound around the forming drum 35 and the cylindrical carcass layer 30 is formed, or before the bead core 12 is set at the set position P located on the outer side of both ends of the carcass layer 18 in the axial direction. Further, these steps can be implemented without specifically limiting the order thereof.

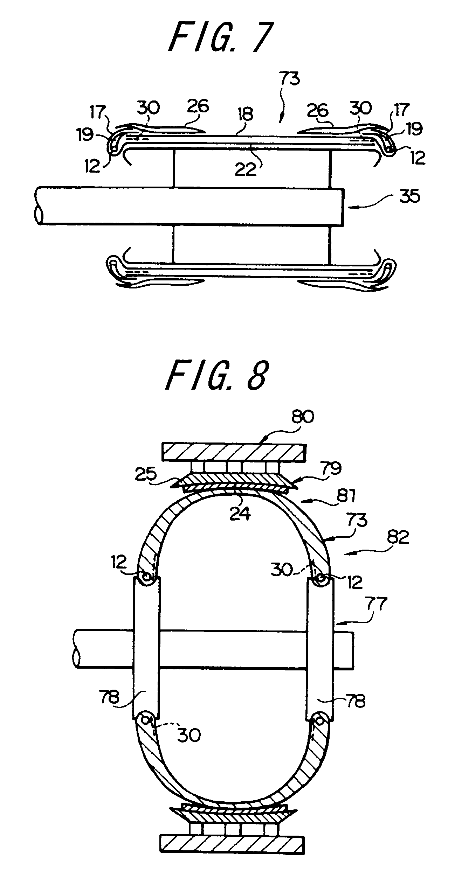

Next, the carcass layer 18 located on the outer side in the axial direction than the bead core 12 is folded around the bead core 12 by a not-shown folding mechanism as shown in FIG. 7, and then, a sheet-like side tread 26 is supplied to and wound around the outer side of the forming drum 35 (carcass layer 18) by side supplying means 72 shown in FIG. 4, whereby the cylindrical side tread 26 is formed. Consequently, a cylindrical semi-finished tire 73 (green case) having the inner liner 22, the cord reinforcing layer 30, the carcass layer 18, the bead core 12, the filler 19 and the side tread 26 is formed around the forming drum 35.

Next, the semi-finished tire 73 is transported from the forming drum 35 to shaping drum 77 shown in FIG. 8 by not-shown transporting means, and is held from the inner side in the radial direction thereof by bead lock mechanisms 78 of the shaping drum 77; the bead lock mechanisms 78 are approximated to each other; air is supplied to the inside of the semi-finished tire 73; and, the semi-finished tire 73 is expanded and deformed into a substantially toroidal cross-sectional form. At this time, a belt tread band 79 formed by a not-shown band forming drum and comprising the belt layer 24 and the top tread 25 is transported to the outer side in the radial direction of the semi-finished tire 73 by transporting means 80, and is attached to the outer side of the semi-finished tire 73 in the radial direction, whereby an unvulcanized tire 81 is formed.

The shaping drum and the transporting means 80 described above as a whole constitute forming means 82 that expands and deforms the semi-finished tire 73 in the toroidal form, attaches at least the tread--the belt layer 24 and the top tread 25 in this embodiment--on the outer side of the semi-finished tire 73 in the radial direction, and forms the unvulcanized tire 81. Note that the unvulcanized tire 81 may be formed by a single-stage type drum. In this case, this drum functions as the forming drum and the forming means. Further, in the present invention, the carcass layer 18 may be folded around the bead core 12 at the shaping drum 77.

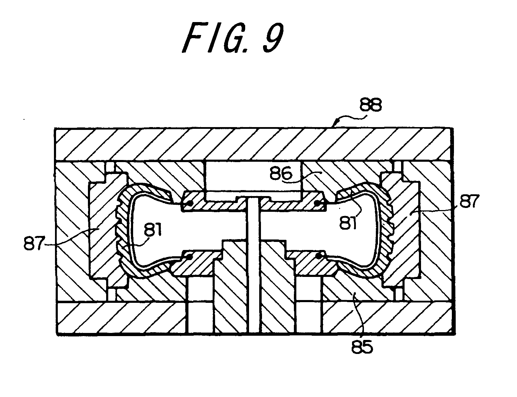

In a case where the unvulcanized tire 81 is used for manufacturing the bias tire, the breaker layer and the tread, or only the tread is attached to the semi-finished tire 73 on the forming drum 35, the unvulcanized tire 81 is formed, and the unvulcanized tire 81 is expanded and deformed in the toroidal form. After the unvulcanized tire 81 is formed as described above, the unvulcanized tire 81 is transported by the not-shown transporting means to vulcanizing means 88 comprising a lower side mold 85, an upper side mold 86, and a sector mold 87 as shown in FIG. 9, and is vulcanized by the vulcanizing means 88, whereby pneumatic tire 11 having the toroidal form is formed. Note that the unvulcanized tire 81 may be vulcanized by vulcanizing means having two vertically-separated molds.

Here, after the semi-finished tire 73 (unvulcanized tire 81) described above is expanded and deformed into the substantially toroidal form, and the cord reinforcing layer 30 is deformed from the cylindrical shape to a flange-like shape, the cord reinforcing layer 30 is extended larger in the circumferential direction with distance from the bead core 12 (the outer in the radial direction, the more the cord reinforcing layer 30 is extended), and hence, the amplitude a of the wavy steel cord 32 constituting the cord reinforcing layer 30 becomes smaller and the wavelength λ thereof becomes larger with distance from the bead core 12. As a result, the amplitude a and the wavelength λ of the cord reinforcing layer 30 as a whole become extremely nonuniform, in particular, when viewed in the radial direction.

Therefore, in the present embodiment, at the time when the cylindrical cord reinforcing layer 30 is formed by winding the wavy steel cord 32 (ribbon-like body 37) around the cylindrical forming drum 35 plural times while extending it in the longitudinal direction as described above, the amount of extension of the wavy steel cord 32 is made gradually decreased with distance from the set position P of the bead core 12 in the axial direction.

As a result, the amount of extension applied in advance to the wavy steel cord 32 in the vicinity of the set position P is made approximated to the amount of extension of the wavy steel cord 32 at a position spaced away from the set position P according to the expansion and deformation. This makes it possible to make uniform at least either one of the amplitude and the wavelength of the wavy steel cord 32 in the pneumatic tire 11, that is, the amplitude as described above in a case where the amplitude a of the wavy steel cord 32 before extended is constant as described above, both the amplitude and the wavelength throughout the cord reinforcing layer 30 in a case where both the amplitude a and the wavelength λ are constant, in particular, when viewed in the radial direction, whereby performance of the tire can be improved.

Further, in the present embodiment, the straight steel cord 39 is bent in the wave form to form the wavy steel cord 32, at the same time when or before wound around the forming drum 35. Therefore, it is only necessary to traversely guide the wavy steel cord 32 (steel cord 39) along a line parallel to the rotation axis of the forming drum 35 at the time of winding, and as a result, control at the time of winding and the like becomes easy, and working efficiency can be improved. Note that, to make the amplitude a uniform, it may be possible to employ, as the wavy steel cord, a wavy steel cord 32 whose amplitude a before extended gradually increases toward the end edge 37b from the start edge 37a.

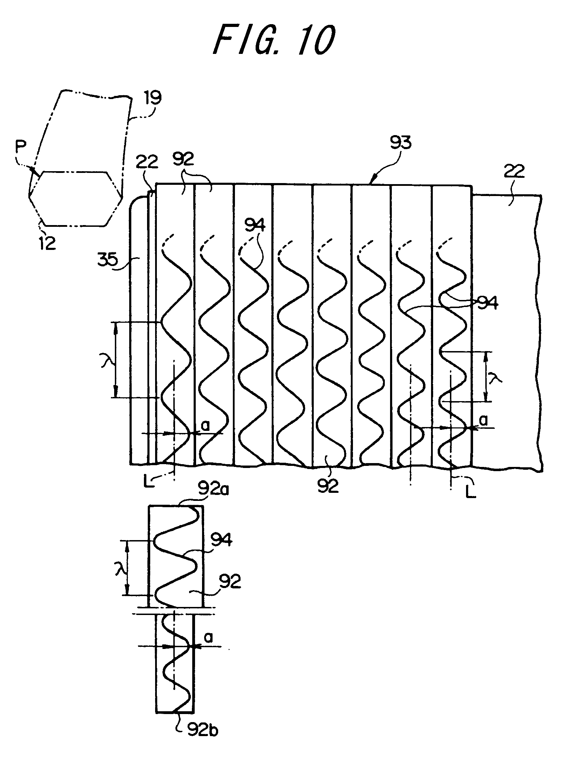

Next, a second embodiment according to the present invention will be described on the basis of the drawings.
In the second embodiment, as shown in FIG. 10, a ribbon-like body 92 whose wavelength λ before extended is constant while the amplitude a thereof decreases toward the end edge 37b from the start edge 37a is formed. Thereafter, the ribbon-like body 92 is wound plural times around the forming drum 35 while being extended in the longitudinal direction between the forming drum 35 and the feeding mechanism 58, and a cylindrical cord reinforcing layer 93 is formed on the outer side of the forming drum 35. At this time, the amount of extension described above decreases toward an end edge 92b from a start edge 92a of the ribbon-like body 92, that is, the amount of extension is maximum at a position closest to a set position P of the bead core 12, and is made gradually decreased with distance from the set position P in the axial direction.

As a result, the wavelength λ of the ribbon-like body 92 (wavy steel cord 94) wound around the forming drum 35 becomes shorter by the extension described above with distance from the set position P. Thereafter, the pneumatic tire 11 is manufactured through operations similar to the operations described above. During the operations, the semi-finished tire 73 (unvulcanized tire 81) is expanded and deformed in the substantially toroidal form, and the cord reinforcing layer 93 is deformed from the cylindrical shape to a flange-like shape. As a result, the cord reinforcing layer 93 is extended larger in the circumferential direction with distance from the bead core 12 (the outer in the radial direction, the more extended).

At this time, the amount of extension applied in advance to the wavy steel cord 94 in the vicinity of the set position P is approximated to the amount of extension of the wavy steel cord 94 at a position spaced away from the set position P according to the expansion and deformation. Consequently, the wavelength λ, of the wavy steel cord 94 in the pneumatic tire 11 is made uniform throughout the cord reinforcing layer 93, in particular, when viewed in the radial direction, and performance of the tire is improved.

Here, preferably, the amount of extension described above is adjusted such that the wavelength λ of the wavy steel cord 94 wound at a position closest to the set position P takes a value approximate to the wavelength of the wavy steel cord 94 located at the outermost side of the cord reinforcing layer 93 in the radial direction in a state of the pneumatic tire 11. With this adjustment, the wavelength λ of the wavy steel cord 32 of the pneumatic tire 11 can be effectively made uniform in the cord reinforcing layer 93. Further, since the wavelength λ of the wavy steel cord 94 before extended is constant, the forming operation of the wavy steel cord 94 become easy.

Here, the wavy steel cord 94 (ribbon-like body 92) having the amplitude a decreased toward the end edge 92b from the start edge 92a as described above can be easily formed such that, for example, the bending means 40 described in the first embodiment is provided with a distance adjusting mechanism comprising a screw mechanism, motor and the like that changes the distance between the rotation axes of a pair of gears 42 by approaching to or being separated from each other; the gears 42 are made spaced away from each other by the distance adjusting mechanism; and, the distance between the outer teeth 43 of the gears 42 is gradually made increased as the formation of the wavy steel cord 94 advances. Note that other configuration and operation of the second embodiment are almost similar to those of the first embodiment described above.

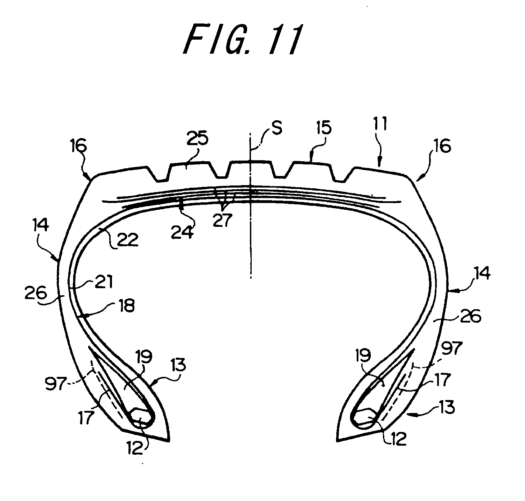

Note that, although the cord reinforcing layer 30 is disposed at the bead portion 13 located on the inner side in the axial direction than the bead core 12 in the embodiments described above, it may be possible in the present invention to dispose the cord reinforcing layer 97 in lieu of the cord reinforcing layer 30 while being overlapped with a folding portion 17 of the carcass layer 18 at the bead portion 13 located on the outer side in the axial direction than the bead core 12, as shown in FIG. 11. In this case, the cord reinforcing layer 97 is formed such that the carcass layer 18 is formed on the forming drum 35 and the bead core 12 is set at the set position P, more specifically, the formed carcass layer 18 is folded around the bead core 12, and then the ribbon-like body 37 is wound.

In the present invention, both the cord reinforcing layer 30 and the cord reinforcing layer 97 may be disposed on the inner side in the axial direction and on the outer side in the axial direction of the bead core 12, respectively. Alternatively, they may be disposed between filler 19 and the carcass layer 18. The cord reinforcing layer may be disposed in the vicinity of a position where the width of the tire is maximum, or be disposed between the shoulder portion 16 and the position where the width of the tire is maximum, that is, it is only necessary that the cord reinforcing layer is disposed at least partially between the bead portion 13 and the shoulder portion 16. In the embodiments, the the ribbon-like body 37, 92 is wound directly around the forming drum 35 immediately after forming by directly linking the forming means of the ribbon-like body 37, 92 and the forming drum 35. However, in the present invention, it may be possible that the ribbon-like body 37, 92 is wound up in a rolled form after formed, and is temporarily stored; and, then, the stored ribbon-like body in the rolled form is unrolled and the unrolled the ribbon-like body is wound around the forming drum 35 as necessary.

### INDUSTRIAL APPLICABILITY

The present invention is applicable to an industrial field of tire in which a cord reinforcing layer comprising a wavy steel cord is disposed between the bead portion and the shoulder portion.

### EXPLANATION OF REFERENCE NUMERALS

- 11: Pneumatic tire
- 12: Bead core
- 13: Bead portion
- 16: Shoulder portion
- 18: Carcass layer
- 21: Carcass ply
- 25: Tread
- 30: Cord reinforcing layer
- 32: Wavy steel cord
- 35: Forming drum
- 39: Steel cord
- 40: Bending means
- 42: Gear
- 43: Outer tooth
- 44: Driving mechanism
- 58: Feeding mechanism
- 65: Cord supplying means
- 70: Carcass supplying means
- 71: Bead core supplying means
- 73: Semi-finished tire
- 81: Unvulcanized tire
- 82: Forming means
- 88: Vulcanizing means
- 92: Ribbon-like body
- 93: Cord reinforcing layer
- 94: Wavy steel cord
- P: Set position
- a: Amplitude
- λ: Wavelength

## Claims

1. A method of manufacturing tire, the tire having: a carcass layer provided with bead cores at respective ends thereof and toroidally extending; a cord reinforcing layer disposed at least partially between a bead portion and a shoulder portion, extending in a circumferential direction and having a wavy steel cord bent in a wave form; and a tread disposed at least over the radially outside of the carcass layer in a radial direction, the method comprising steps of:
winding a carcass ply on a cylindrical forming drum and forming a cylindrical carcass layer;
setting bead cores at set positions respectively on the outer sides of both axial ends of the carcass layer;
forming a cylindrical cord reinforcing layer by winding a wavy steel cord a plurality of times around the forming drum such that an amount of an extension of the wavy steel cord is more reduced as an axial distance from each the set position for the respective bead cores more increases;
forming an unvulcanized tire by expanding and deforming a cylindrical semi-finished tire, which is made of the carcass layer, the bead cores and the cord reinforcing layer, into a substantially toroidal form, and then attaching at least tread on the outer side of the semi-finished tire; and,
vulcanizing the unvulcanized tire.

2. The method of manufacturing tire according to claim 1, wherein
an amplitude of the wavy steel cord is constant in a state before the extension, and,
an amplitude of an potion of the wavy steel cord wound closest to the set position is made approximated to an amplitude of a radial outermost potion of the wavy steel cord of the cord reinforcing layer in the state of the finished tire.

3. The method of manufacturing tire according to claim 2, wherein
a wavelength of the wavy steel cord is also constant in the state before the extension, and,
the amplitude and an wavelength of the potion of the wavy steel cord wound closest to the set position is made approximately matched to the amplitude and an wavelength of the radial outmost potion of the wavy steel cord of the cord reinforcing layer in the state of the finished tire.

4. The method of manufacturing tire according to claim 1, wherein
a wavelength of the wavy steel cord is constant in a state before the extension, and,
a wavelength of a potion of the wavy steel cord wound closest to the set position is made approximated to an wavelength of a radial outermost potion of the wavy steel cord of the cord reinforcing layer in the state of the finished tire.

5. The method of manufacturing tire according to any one of claims 1-4, wherein, with using a feeding mechanism that feeds the wavy steel cord to the forming drum always at a constant feeding velocity is provided, a peripheral velocity of the forming drum is varied such that the wavy steel cord stretched between the feeding mechanism and the forming drum is uniformly extended.

6. The method of manufacturing tire according to any one of claims 1-5, wherein the cord reinforcing layer is formed by spirally winging the wavy steel coad a plurality of times.

7. A device of manufacturing tire, the tire having: a carcass layer provided with bead cores at respective ends thereof and toroidally extending; a cord reinforcing layer disposed at least partially between a bead portion and a shoulder portion, extending in a circumferential direction and having a wavy steel cord bent in a wave form; and a tread disposed at least over the radially outside of the carcass layer, the device comprising:
a carcass supplying means for supplying and winding a carcass ply on the outer side of a cylindrical forming drum to form a cylindrical carcass layer;
a bead core supplying means for supplying and setting bead cores to set positions on the outer sides of both axial ends of the carcass layer;
a cord supplying means for forming a cylindrical cord reinforcing layer by winding a wavy steel cord a plurality of times around the forming drum so that an amount of extension of the wavy steel cord is more reduced as an axial distance from each the set position for the respective bead cores more increases;
a forming means for forming an unvulcanized tire by expanding and deforming a cylindrical semi-finished tire, which is made of the carcass layer, the bead cores and the cord reinforcing layer, into a substantially toroidal form, and then attaching at least tread on the radial outside of the semi-finished tire; and,
a vulcanizing means for vulcanizing the unvulcanized tire to obtain the finished tire.

8. The device of manufacturing tire according to claim 7, the device further comprising a bending means, located on the upper stream side of the cord supplying means, which has a pair of gears disposed with a predetermined distance between outer teeth biting each other and a driving mechanism for rotating these gears in opposite direction at a uniform velocity, wherein the bending means forms the wavy steel cord from a straight steel cord by passing the straight steel cord between the rotating gears and bending the straight steel cord into a wave form before the wavy steel cord is wound.
